# EUROPEAN PATENT SPECIFICATION

(11) **EP 3 779 166 B1**
(45) Date of publication and mention of the grant of the patent: **11.10.2023**
(21) Application number: 18913055.2
(22) Date of filing: 05.12.2018
(51) Int. Cl.: F02G 1/043, F03G 7/06, F25B 11/02, F03G 4/02, F03G 4/00, F03G 6/00, F03G 7/04

(54) **THERMAL AND ELECTRICAL POWER TRANSFORMER**
THERMISCHER UND ELEKTRISCHER LEISTUNGSWANDLER
TRANSFORMATEUR THERMOÉLECTRIQUE

(30) Priority: 30.03.2018 RU 2018111581
(43) Date of publication of application: 17.02.2021
(73) Proprietor: Baiakin, Sergei Gennadevich, Krasnoyarsk, 660036 (RU)
(72) Inventor: GAVRIKOV, Andrei Viktorovich, Krasnoyarsk, 660036 (RU); BAIAKIN, Sergei Gennadevich, Krasnoyarsk, 660036 (RU)
(74) Representative: Jeck, Anton
(86) International application number: PCT/RU2018/000784
(87) International publication number: WO 2019/190349

(56) References cited:
- EP-A1- 3 001 112
- AU-A1- 2010 246 433
- KR-A- 20150 098 163
- RU-C2- 2 331 027
- RU-U1- 104 293
- RU-U1- 114 134
- US-A1- 2016 187 033

## Description

The invention relates to the field of energy production and, specifically, to thermal and electrical power generation.

There are well-known and widely-used heat pumps, which utilize low-temperature heat sources to transform the thermal power of low-temperature sources, such as water, air, soil, and solar radiation, to a higher-temperature power suitable for heating residential and commercial buildings.

The disadvantage of such devices is the low value of the coefficient of transformation of electrical power into thermal power, or coefficient of performance (COP). The COP shows by how many times the amount of thermal power supplied to the user exceeds the amount of electrical power required to transfer thermal energy from a low-temperature source to a high-temperature user. The actual values of the efficiency of modern heat pumps are about COP = 2.0 (source (evaporator) temperature of -20°C) and about COP = 4.0 (source temperature of +7°C).

There are well-known methods and devices for transforming thermal power of the low-temperature sources into electrical. The closest is a Stirling engine (https://electrosam.ru/glavnaia/elektrooborudovanie/elektropitanie/dvigatel-stirlinga/, ELECTROSAM.RU, 2018), which has the following advantages:
- like all external combustion engines, a Stirling engine can operate based on almost any temperature difference generated, for example, between different layers of water in the ocean, by the sun, by a nuclear or isotope heater, a coal or wood-burning stove, etc.;
- a Stirling engine allows for the provision of unattainable for other engines reserve of operability measuring tens and hundreds of thousands of hours of continuous operation;
- for transformation of certain types of thermal energy, especially in case of small temperature differences, Stirling engines are the most efficient types of engines. For example, when converting solar energy into electricity, Stirling engines demonstrate higher efficiency (up to 31.25%) than steam-driven heat engines;
- a Stirling engine is environmentally friendly and does not consume working media. Environmental cleanliness of the engine is caused by the environmental cleanliness of the heat source.

The disadvantages of Stirling engines, including rotary engines (RU 2451811 C2, F02G 1/043, F02G 1/053, F01C 1/344, 05.27.2012, Bull. No. 15), are the complexity of the design, greater number of structural parts compared to a turbine, low shaft speeds, and variable shaft torque, which causes vibration. All these cause increased heat losses and, hence, low efficiency of the transformation of thermal energy into mechanical.

An electrical heat generator Capstone WHG125 is known (http://ngee.ru/catalog-kompanii?id=264&type=11&view=object), comprising an evaporator, turbine with an electrical generator, condenser, and compressor (pump). The device uses the Organic Rankine Cycle (ORC).

The device operates as follows. The working medium (R245fa) in the receiver is in the liquid state at the condensation temperature and pressure. The pump pumps the R245fa medium to the evaporator, while increasing the pressure. The working medium passes through an economizer, while being heated by the heat of steam from the electrical power module. Next, the working medium enters the evaporator, where it undergoes transition into a vapor phase due to heat supplied from an external source. The produced steam then enters the turbine of the electrical power unit, where steam pressure decreases to a condensation pressure, while driving the rotor coupled with the electrical generator. After performing work in the electrical power unit, the working medium still contains a large amount of heat, part of which is transferred to the liquid phase in the economizer to increase the overall efficiency of the system. The working medium in the form of steam enters the cooler, where it condenses into a liquid and flows down into the receiver to be reused in the cycle. The device has a sealed power unit containing a turbine on magnetic bearings operating at 26,500 rpm. The level of thermal into electrical energy conversion efficiency is 38%.

The disadvantages of the described device are: inability to operate in the heat pump mode, existence of losses of power required to operate the pump (compressor) via electric drive, and, hence, low efficiency.

AU 2010 246 433 A1 discloses a power generator assembly including a heat collector for collecting heat from a heat source, a Rankine cycle heat engine arranged in fluid communication with the heat collector, the heat collector configured to operatively transfer heat to the heat engine via a fluid, the heat engine configured to generate electrical power, a heat sink arranged in fluid communication with the heat engine and configured to dissipate heat from the heat engine, and a controller configured to control a flow of fluid between the heat collector and the heat engine according to a predetermined temperature of the heat source.

The objective of the proposed invention is to create a thermal and electrical power generator utilizing low-temperature heat sources, which allows for the provision of a highly efficient process of co-generation of thermal and electrical power.

The technical result is achieved by the fact that the proposed device, comprising an evaporator, a condenser, a compressor, a turbine with a throttle, a thermal energy supply regulator, a generator/electric motor, and a controller, is designed to generate both thermal and electrical power. Furthermore, in order to increase the coefficient of transformation (COP) and generation of electrical energy from thermal energy, the device is designed in such a way that the input of the generator/electric motor is connected to an electrical power source, and the output is connected to an electrical power user; the generator/electric motor is connected to a first control channel of said controller, a second control channel of said controller is connected to the thermal energy supply regulator, the input of the thermal energy supply regulator is connected to the condenser, and the output is connected to a thermal energy user, while the throttle is embodied in the form of a turbine nozzle, wherein the shaft of said turbine is connected to the shaft of the compressor, and the shaft of the compressor is connected to the shaft of the generator/electric motor.

The principle of operation of the device is based on the fact that the amount of mechanical (or electrical, considering high conversion efficiency) power required to operate the heat pump constitutes up to 25% (COP = 4.0) of the amount of thermal power supplied from a low-temperature source to a high-temperature user. At the same time, the level of thermal to electrical power conversion efficiency by means of a turbine in the Capstone WHG125 electrical heat generator is 38%. Thus, the efficiency of converting thermal power into electrical power using a turbine (38%) exceeds the existing efficiency of heat pumps (25%, COP = 4.0), which makes it possible to use a portion of the high-temperature thermal power of the working medium to create the mechanical power required for the working medium to transfer the thermal power from a low-temperature heat source (evaporator) to a high-temperature condenser, and then to a user. The described operating principle is similar to that of a Stirling engine.

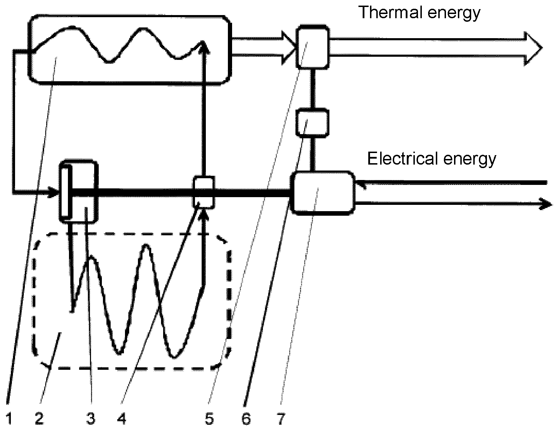

The schematic diagram of the device is illustrated by the drawing.

The device operates as follows.

The user sets the amount of consumed thermal power using regulator (5). The working medium in evaporator (2) is at a temperature of the heat source (soil, water, air). Controller (6) switches generator/electric motor (7) into the electric motor mode, and compressor (4), connected to the shaft of the generator/electric motor, pumps the working medium into condenser (1). Due to an increase in pressure, the working medium heats up and transfers the thermal power from the condenser to the user via regulator (5). Next, the working medium enters nozzle (3) of the turbine, the shaft of which is connected to the shaft of compressor (4) and the shaft of the generator/electric motor. The turbine nozzle simultaneously serves as a throttle, which reduces the pressure of the working medium, and a converter of thermal power into mechanical by rotating the turbine. As the working medium passes through the turbine nozzle, it cools below the evaporator temperature. In this case, the portion of thermal power of the working medium, which was not supplied to the user, is transformed inside the turbine into mechanical power on the shaft of the compressor and, hence, the shaft of the generator/electric motor. Next, the working medium, cooled below the evaporator temperature, enters the evaporator, where it heats up to the evaporator temperature as a result of receiving the thermal power from the heat source required for the device to operate. Thus, the consumption of electrical power from an external source by the generator/electric motor is reduced due to the power generated by the turbine, while the coefficient of transformation of electrical power into thermal power (COP) increases. When the thermal power supplied to the user decreases, the excess thereof is transformed by the turbine into mechanical power on the turbine shaft, which is sufficient to operate the compressor. As a result, the consumption of electrical power from an external source by the generator/electric motor stops, controller (6) switches the generator/electric motor into the generator mode, and the portion of the power in excess of what is required to operate the compressor is transformed into electrical power by means of the generator/electric motor and supplied to the user. In such mode, the device generates electrical power by using the source of thermal energy similar to a Stirling engine.

The advantage of the proposed device is the possibility of co-generation of thermal and electrical power from low-temperature heat sources within a wide range of the user-specified ratios, high efficiency, compactness, high coefficient of transformation (COP), low material consumption, and low vibration level.

## Claims

1. A thermal and electrical power transformer using low-temperature heat sources, **characterized in that** it represents a heat pump comprising an evaporator (2), a condenser (1), a compressor (4), a turbine with a throttle (3), a thermal power supply regulator (5), a controller (6), and generator/electric motor (7), the input of which is connected to a source of electrical energy, and the output is connected to a user of electrical energy, the generator/electric motor is connected to a first control channel of said controller, a second control channel of said controller is connected to the thermal energy supply regulator, the input of said regulator is connected to the condenser, and the output is connected to the thermal energy user, wherein the throttle is embodied in the form of a nozzle of the turbine, the shaft of which is connected to the shaft of the compressor, and the shaft of said compressor is connected to the shaft of the generator/electric motor.

## Patentansprüche

1. Ein thermischer und elektrischer Leistungstransformator welcher Niedertemperatur-Wärmequellen verwendet, **dadurch gekennzeichnet, dass** er eine Wärmepumpe umfasst, aufweisend aus einen Verdampfer (2), einen Kondensator (1), einen Verdichter (4), eine Turbine mit einer Drossel (3), einen Regler für die thermische Leistungsabgabe (5), einen Controller (6) und einen Generator/Elektromotor (7), wobei die Eingangsbuchse des Generators/Elektromotors mit einer Quelle für elektrische Energie verbunden ist, und die Ausgangsbuchse ist mit einem Verbraucher für elektrische Energie verbunden ist, wobei der Generator/Elektromotor mit einem ersten Steuerkanal dieses Controllers verbunden ist, wohingegen ein zweiter Steuerkanal dieses Controllers mit dem Regler für die thermische Energieversorgung verbunden ist, wobei die Eingangsbuchse dieses Reglers mit dem Kondensator verbunden ist, während die Ausgangsbuchse mit dem thermischen Energieverbraucher in Verbindung steht, wobei die Drossel in Form einer Düse der Turbine ausgeführt ist, deren Welle mit der Welle des Verdichters verbunden ist, wobei die Welle des Verdichters mit der Welle des Generators/Elektromotors verbunden ist.

## Revendications

1. Un transformateur à puissance thermique et électrique utilisant des sources de chaleur à basse température est caractérisé de sorte qu'il comprend une pompe à chaleur présentant un évaporateur (2), un condensateur (1), un compresseur (4), une turbine à inductance (3), un régulateur pour la puissance de la sortie thermique (5), un contrôleur (6) et un générateur/électromoteur (7) où la prise d'entrée du générateur/électromoteur est reliée à une source de l'énergie électrique et la sortie jack est reliée à un consommateur de l'énergie électrique où le générateur/l'électromoteur est relié au premier canal de commande de ce contrôleur, tandis qu'un deuxième canal de commande de ce contrôleur est relié au régulateur pour l'approvisionnement en énergie thermique où la prise d'entrée de ce régulateur est reliée au condensateur, alors que la sortie jack est reliée au consommateur d'énergie thermique où la réactance est exécutée sous forme d'une tuyère de la turbine dont la vague est reliée à la vague du compresseur où la vague du compresseur est reliée à la vague du générateur/électromoteur.
